# EUROPÄISCHE PATENTSCHRIFT

(11) **EP 1 171 752 B1**
(45) Veröffentlichungstag und Bekanntmachung des Hinweises auf die Patenterteilung: **06.07.2005**
(21) Anmeldenummer: 00914014.6
(22) Anmeldetag: 13.04.2000
(51) Int. Cl.: G01C 15/00, G01C 15/06, G01S 17/42

(54) **INDIREKTE POSITIONSBESTIMMUNG MIT HILFE EINES TRACKERS**
INDIRECT POSITION DETERMINATION WITH THE AID OF A TRACKER
DETERMINATION DE POSITION INDIRECTE AU MOYEN D'UN DISPOSITIF DE POURSUITE

(30) Priorität: 19.04.1999 CH 71699
(43) Veröffentlichungstag der Anmeldung: 16.01.2002
(73) Patentinhaber: Leica Geosystems AG, 9435 Heerbrugg (CH)
(72) Erfinder: MARKENDORF, Albert, CH-5034 Suhr (CH); LOSER, Raimund, D-79713 Bad Säckingen (DE); HAURI, Bernhard, CH-5053 Staffelbach (CH)
(74) Vertreter: Frei, Alexandra Sarah
(86) Internationale Anmeldenummer: PCT/CH2000/000216
(87) Internationale Veröffentlichungsnummer: WO 2000/063645

(56) Entgegenhaltungen:
- WO-A-91/16598
- DE-A- 3 340 317
- DE-A- 3 808 972
- DE-A- 4 038 521

## Beschreibung

Die Erfindung liegt auf dem Gebiete der geometrischen Messtechnik und betrifft eine Vorrichtung nach dem Oberbegriff des unabhängigen Patentanspruchs. Die Vorrichtung dient zur indirekten Bestimmung der Position von Punkten mit Hilfe eines Trackers, wobei zwischen zu bestimmender Punktposition und Tracker keine direkte Sichtverbindung zu bestehen braucht.

Ein Tracker weist ein Mittel zur Erzeugung eines Lichtstrahles, insbesondere eines Laserstrahls auf. Der Laserstrahl wird mit Hilfe eines Spiegels auf einen Zielpunkt in Form eines Retroreflektors gerichtet und von diesem in den Tracker zurückreflektiert. Der Tracker weist ferner Mittel auf, um den Spiegel automatisch derart auszurichten, dass der Weg des reflektierten Strahls möglichst derselbe ist wie der Weg des ausgesendeten Strahls. Diese Mittel erlauben es dem Tracker, mit dem Spiegel bzw. mit dem Laserstrahl einem sich bewegenden Zielpunkt zu folgen. Die Orientierung des Spiegels wird als Messgrösse für die Richtung von Tracker zu Zielpunkt registriert. Der Traker weist ferner ein Interferometer auf, mit dem bei einer Bewegung des Zielpunktes Distanzveränderungen zwischen Tracker und Zielpunkt erfassbar sind (relative Distanzmessung). Gegebenenfalls weist der Tracker auch Mittel zur absoluten Distanzmessung auf, die beispielsweise auf dem Prinzip von Fizeau beruhen.

Tracker werden vornehmlich verwendet zur Ausmessung der Bahn eines sich bewegenden Zielpunktes oder zum Abtasten von Oberflächen, wobei ein Zielpunkt über die Oberfläche bewegt wird. Tracker können aber auch für die Bestimmung der Position von stationären Zielpunkten verwendet werden, wobei diese Positionen durch die (bekannte) Trackerposition, durch die Orientierung des Trackerspiegels (Richtung des Trackerstrahls) und durch die absolute Distanz zwischen Tracker und Zielpunkt gegeben sind. Für derartige direkte Messungen muss eine direkte Sichtverbindung zwischen Zielpunkt und Tracker bestehen, das heisst der Trackerstrahl darf zwischen Tracker und Zielpunkt nicht unterbrochen sein. (DE-A-4 038 521).

Es wäre aber wünschenswert, wenn mit Hilfe des Trackers auch Positionen von Punkten bestimmbar oder Punkte verfolgbar wären, zu denen vom Tracker aus keine direkte Sichtverbindung besteht. Dadurch könnte in vielen Fällen eine Installation einer Mehrzahl von Trackern oder ein Verschieben eines einzelnen Trackers vermieden werden.

Zur Vermessung von Punkten, zu denen vom Messinstrument aus keine direkte Sichtverbindung besteht, werden beim Vermessen mit Theodoliten oder beim Vermessen mit digitalen Kameras (Photogrammetrie) Werkzeuge zum indirekten Messen verwendet. Diese Werkzeuge weisen einen Referenzpunkt und mindestens zwei Zielpunkte auf, wobei das Werkzeug derart positionierbar ist, dass der Referenzpunkt und der Punkt mit der zu bestimmenden Position relativ zueinander genau definierte Positionen haben, und wobei die mindestens zwei Zielpunkte und der Referenzpunkt relativ zueinander genau definierte Positionen aufweisen. Soll die Position eines Punktes bestimmt werden, wird das Werkzeug derart positioniert, dass zwischen Referenzpunkt des Werkzeuges und zu bestimmender Punktposition die genannte, genau definierte Relation besteht und dass zwischen Zielpunkten und Messinstrument eine direkte Sichtverbindung besteht. Dann werden die Positionen der Zielpunkte bestimmt und aus den bekannten Positionen der Zielpunkte relativ zueinander wird die Position und mindestens teilweise die Orientierung des Werkzeuges ermittelt. Aus der berechneten Position und Orientierung des Werkzeuges wird die Position des Referenzpunktes und aus den bekannten relativen Positionen von Referenzpunkt und gesuchtem Punkt wird die Position des gesuchten Punktes berechnet. Es ist ebenfalls bekannt, mit entsprechend ausgerüsteten Werkzeugen, nicht nur die gesuchte Position eines Punktes zu ermitteln sondern auch die Orientierung der Oberfläche, auf der sich dieser Punkt befindet.

Die relativen Positionen von Referenzpunkt und zu bestimmendem Punkt werden rein mechanisch definiert, beispielsweise mit einem Taster, einer Spitze oder mit einem Bolzen mit Bund, oder optisch-mechanisch, beispielsweise über einen virtuellen Punkt, eine Strichplatte oder ein Fadenkreuz. Die Anordnung der Zielpunkte stellt üblicherweise eine einfache geometrische Form dar (Gerade, Kreis, Kugel), da eine solche mathematisch einfach erfassbar ist. Bei den heute üblichen, hohen Rechnerleistungen sind aber auch kompliziertere Anordnungen anwendbar.

Werkzeuge zum Vermessen von Punkten, zu denen keine direkte Sichtverbindung besteht, und/oder zum Vermessen von Oberflächenorientierungen sind beispielsweise beschrieben in der Publikation SE-456454 oder WO91/16598.

Auch die Publikation DE-4038521 beschreibt derartige Werkzeuge, die je zwei Reflektoren aufweisen, die mit dem Referenzpunkt auf einer Linie liegen und von denen nacheinander die Distanz von einem Messinstrument (Tachymeter) und die Richtung dieser Distanz gemessen werden. In dieser Publikation wird auch vorgeschlagen, die zwei Reflektoren durch einen einzigen Reflektor zu ersetzen und diesen zwischen den aufeinanderfolgenden Messungen von einer ersten Position in eine zweite Position zu bewegen.

Die oben beschriebenen Werkzeuge zur indirekten Bestimmung von Punktpositionen und/oder Oberflächenorientierungen sind auch bei Messungen mit einem Tracker anwendbar, wenn es beispielsweise darum geht, die Position eines Punktes zu bestimmen, von dem aus keine direkte Sichtverbindung zum Tracker besteht. Dafür sind die Zielpunkte als Retroreflektoren auszubilden. Für die Messung ist der Tracker auf einen der Zielpunkte zu richten, ist die Richtung und die absolute Distanz vom Tracker zum anvisierten Zielpunkt zu bestimmen und ist dieses Procedere für alle Zielpunkte des Werkzeuges zu wiederholen. Die ermittelten Messwerte sind dann in bekannter Weise zu

Ein solches Procedere ist möglich aber eher aufwendig, denn der Tracker muss auf jeden einzelnen Zielpunkt ausgerichtet werden, was von Hand zu tun ist oder wofür spezielle Hilfsmittel, beispielsweise eine mit dem Tracker funktionell verbundene, digitale Kamera oder Mittel zur Vergrösserung des Gesichtsfeldes des Trackers bereitzustellen sind. Ferner muss für die Vermessung jedes Zielpunktes eine absolute Distanzmessung durchgeführt werden, eine Messung, die mit den heute zur Verfugung stehenden Mitteln eine Genauigkeit hat, die der Genauigkeit der interferometrischen, relativen Distanzmessung unterlegen ist.

Das genannte, aufwendige Prozedere kann vermieden werden, wenn die Zielpunkte auf dem Werkzeug derart nahe beieinander angeordnet werden, dass sie alle bei ein und derselben Trackerausrichtung in dessen sehr engem Gesichtsfeld erscheinen. Es ist aber offensichtlich, dass eine derartige Anordnung nur mit einer beschränkten Genauigkeit vermessbar ist.

Die Erfindung stellt sich nun die Aufgabe, eine Vorrichtung zu schaffen, die bei Vermessungen mittels Tracker anwendbar ist, die wie die oben genannten Werkzeuge zum indirekten Messen insbesondere dazu dient, Positionen von Punkten, zu denen vom Tracker aus keine direkte Sichtverbindung besteht, und/oder Oberflächenorientierungen zu bestimmen, und mit der die genannten Nachteile, die bei Verwendung bekannter Werkzeuge zum indirekten Messen mit einem Tracker auftreten, vermieden werden können. Mit der erfindungsgemässen Vorrichtung soll es also möglich sein, indirekte Messungen mit Hilfe eines Trackers einfach und mit einer für Trackermessungen üblichen, hohen Genauigkeit durchzuführen.

Diese Aufgabe wird gelöst durch die Messvorrichtung, wie sie im unabhängigen Patentanspruch definiert ist. Die abhängigen Ansprüche definieren bevorzugte Ausführungsformen der erfindungsgemässen Vorrichtung.

Selbstverständlich ist die erfindungsgemasse Vorrichtung auch anwendbar zur Vermessung von Punkten, von denen aus zwar eine direkte Sichtverbindung zum Tracker besteht, für die aber eine indirekte Messung aus anderen Gründen vorteilhaft ist. Ein derartiger Grund besteht beispielsweise für Punkte auf einer Oberfläche, auf der kein Retroreflektor derart angeordnet werden kann, dass sein optisches Zentrum in der zu bestimmenden Punktposition liegt. In einem derartigen Falle ist bei direkter Messung die berechnete Position zu korrigieren, wobei die Korrektur nicht nur durch die bekannte Grösse des Retroreflektors (Distanz zwischen zu vermessendem Punkt und optischem Zentrum des Reflektors) sondern auch von der gegebenenfalls nicht einfach bestimmbaren Richtung dieser Distanz.

Anstelle der mindestens zwei Zielpunkte, die die bekannten Werkzeuge zur indirekten Bestimmung von Punktpositionen und/oder Oberflächenorientierungen aufweisen und deren Anordnung relativ zum Referenzpunkt genau definiert ist, weist die erfindungsgemässe Messvorrichtung nur einen Zielpunkt in Form eines Retroreflektors auf, wobei dieser eine Zielpunkt auf einer Bewegungsbahn, deren Lage relativ zum Referenzpunkt genau definiert ist, bewegbar ist. Zur Bestimmung der Position und Orientierung der Vorrichtung, wird der Tracker auf den Zielpunkt gerichtet, wird der Zielpunkt auf der Bahn bewegt, derart, dass der Tracker ihm folgen kann, und wird die durchlaufene Bahn oder werden vorgegebene Positionen (z.B. Anfangsposition und Endposition) des Zielpunktes auf der Bahn vermessen. Aus den Messresultaten wird in bekannter Weise die Position und Orientierung der Vorrichtung, daraus die Position des Referenzpunktes und daraus die zu bestimmende Punktposition und/oder Oberflächenorientierung berechnet.

Offensichtlich ist bei dem beschriebenen Vorgehen nur für die Bestimmung der Anfangsposition des Zielpunktes eine Einstellung des Trackers auf den Zielpunkt und eine absolute Distanzmessung notwendig. Für die weiteren Messungen folgt der Tracker dem sich bewegenden Zielpunkt und werden nur noch Distanzverändetungen gemessen (interferometrische, relative Distanzmessungen), die eine sehr hohe Genauigkeit liefern. Daraus folgt, dass die Bestimmung der Orientierung der Vorrichtung nur auf relativen Distanzmessungen beruht, während die Bestimmung der Position der Vorrichtung auf einer absoluten Distanzmessung beruht. Die bei einer derartigen Messung erreichbare Genauigkeit ist höher als die Genauigkeit einer Methode, in der mit dem Tracker mindestens zwei Zielpunkte auf der Messvorrichtung anvisiert und deren Positionen mittels absoluter Distanzmessung bestimmt werden.

Die absolute Distanz zum einzigen Zielpunkt der Messvorrichtung kann auch mit einer quasi-absoluten Messung ermittelt werden, das heisst, indem das Werkzeug von einer Referenzposition, in der der Zielpunkt vom Tracker in einer bekannten Richtung und einer im voraus genau bestimmten Distanz "sichtbar" ist, in die zu vermessende Position bewegt wird und mit dem Tracker bei dieser Bewegung verfolgt wird.

Die Bewegungsbahn des Zielpunktes auf der erfindungsgemässen Messvorrichtung hat vorteilhafterweise eine mathematisch einfach erfassbare Form, das heisst sie ist beispielsweise geradlinig oder kreisbogen-förmig.

Wie bei der Vermessung der mindestens zwei Zielpunkte einer bekannten Vorrichtung zum indirekten Messen, ist es auch für die Messung mit der erfindungsgemässen Vorrichtung notwendig, dass die Vorrichtung während der Messung nicht bewegt wird. Um durch die Bewegung des Zielpunktes auf die Messvorrichtung wirkende Kräfte und dadurch erzeugte Bewegungen der Vorrichtung relativ zum zu vermessenden Punkt zu reduzieren oder zu verhindern, ist es vorteilhaft, die Messvorrichtung fest zu montieren und den Antrieb für die Bewegung des Zielpunktes auf der Vorrichtung anzubringen.

In die Berechnung zur Bestimmung der Position und Orientierung der Messvorrichtung kann ein Kontrollmechanismus eingebaut werden. Entspricht eine durch den Tracker registrierte Bewegungsbahn des Zielpunktes nicht innerhalb eines vorgegebenen Toleranzbereiches der definierten Bahn des Zielpunktes auf der Messvorrichtung, wird dies als Bewegung der Vorrichtung während der Messung interpretiert und die Messung wird als unbrauchbar verworfen.

Das Messverfahren mit der erfindungsgemässen Messvorrichtung und einige beispielhafte Ausführungsformen der erfindungsgemässen Messvorrichtung werden anhand der folgenden Figuren mehr im Detail beschrieben. Dabei zeigen:
- **Figur 1**: eine Aufstellung zur Bestimmung einer Punktposition mit der erfindungsgemässen Messvorrichtung;
- **Figuren 2 bis 5**: beispielhafte Ausführungsformen der erfindungsgemässen Messvorrichtung.

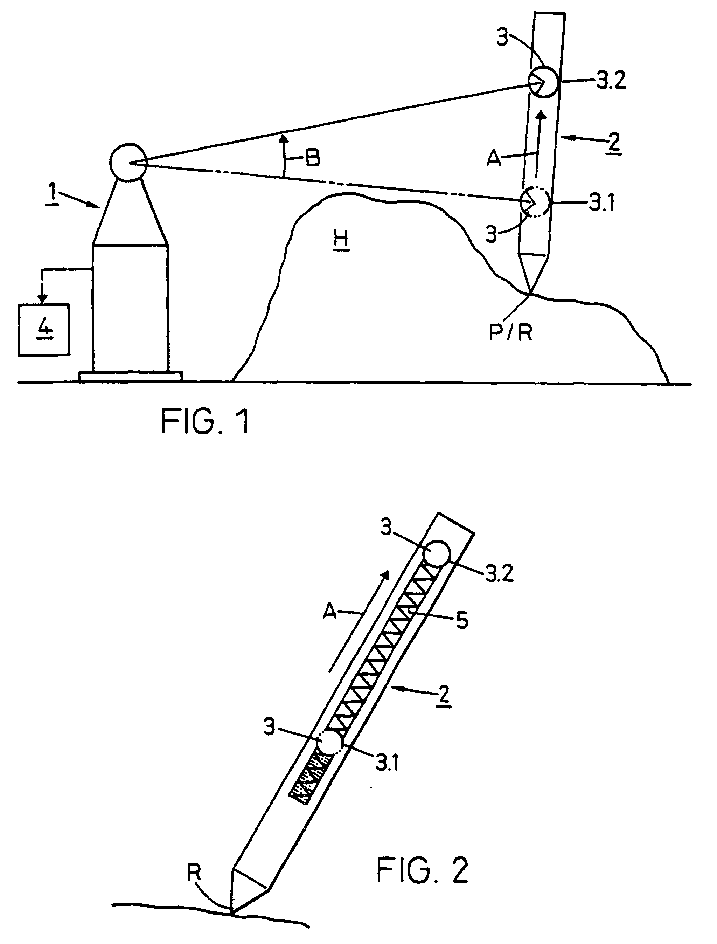

**Figur 1** zeigt eine Aufstellung zur indirekten Bestimmung der Position eines Punktes P mit Hilfe eines Trackers 1 und einer erfindungsgemässen Messvorrichtung 2. Ein Hindernis H verhindert eine direkte Sichtverbindung zwischen dem Tracker 1 und der zu bestimmenden Punktposition P. Für die Messung wird die erfindungsgemässe Vorrichtung 2 derart positioniert, dass zwischen Referenzpunkt R und zu bestimmender Punktposition P die definierte Relation besteht (z.B. Vorrichtungsspitze R im gesuchten Punkt P) und dass zwischen dem Retroreflektor 3, der den Zielpunkt der Vorrichtung darstellt, und dem Tracker 1 eine direkte Sichtverbindung besteht und zwar für die ganze Bewegungsbahn (oder mindestens für einen für die Messung genügenden Bereich der Bewegungsbahn). Die Bewegungsbahn ist im dargestellten Beispiel eine geradlinige Schiene, entlang der der Retroreflektor 3 von einer Anfangsposition 3.1, in der der Retroreflektor strichpunktiert dargestellt ist, in eine Endposition 3.2, in der der Retroreflektor ausgezogen dargestellt ist, bewegbar ist

Für die Messung wird der Tracker 1 auf den Retroreflektor 3 in seiner Anfangsposition 3.1 ausgerichtet und wird diese Anfangsposition absolut oder auf die Trackerposition bezogen bestimmt. Dann wird der Retroreflektor 3 in die Endposition 32 bewegt (Bewegungsbahn bezeichnet mit Pfeil A), wobei ihm der Trackerstrahl folgt (Pfeil B) und die Richtungs- und Distanzveränderungen registriert. In einem Rechner 4, in dem Daten gespeichert sind, die die Bewegungsbahn des Retroreflektors und ihre Position und Orientierung relativ zum Referenzpunkt R definieren, werden anhand der vom Tracker ermittelten Messdaten die Position und Orientierung der Messvorrichtung, die Position des Referenzpunktes R und die Position des Punktes P in an sich bekannter Weise berechnet.

**Figur 2** zeigt als beispielhafte Ausführungsform mehr im Detail die bereits in der Figur 1 dargestellte Messvorrichtung 2. Diese ist im wesentlichen stabförmig und weist als Referenzpunkt R eine Spitze auf. Der Zielpunkt ist ein Retroreflektor 3, der auf einer geradlinigen Bahn von einer Anfangsposition 3.1 in eine Endposition 3.2 bewegbar ist. Der Referenzpunkt liegt auf derselben Geraden wie die Bewegungsbahn des Zielpunktes (optischen Zentrums des Retroreflektors 3) und hat einen genau definierten Abstand von der Anfangsposition 3.1 oder von der Endposition 3.2 des Zielpunktes. Das vorliegende System bestehend aus Zielpunkt-Bewegungsbahn und Referenzpunkt stellt somit eine Gerade mit mindestens zwei Positionen mit bekannten Abständen dar und ist somit mit dem wohl einfachsten mathematischen Modell erfassbar.

Der Antrieb für die Bewegung des Retroreflektors 3 ist eine mit dem Retroreflektor 3 wirkverbundene Spiralfeder 5, die für die Anfangsposition 3.1 in einem arretierten, gespannten Zustand ist. Sobald der Retroreflektor 3 in der Anfangsposition 3.1 vom Trakker 1 erfasst ist, wird die Federarretierung (nicht dargestellt) gelöst und der Retroreflektor 3 wird durch die Federspannung in die Endposition 3.2 getrieben, wobei die Endposition 3.2 durch einen entsprechenden Anschlag definiert sein kann. Die Feder 5 ist derart auszulegen, dass die Geschwindigkeit, die der Retroreflektor 3 auf seinem Weg von der Anfangsposition 3.1 in die Endposition 3.2 erreicht, für den Tracker nachvollziehbar ist. Sie soll also für heute übliche Tracker eine Grossenordnung von 4 m/s nicht überschreiten.

Bei der Verwendung der Messvorrichtung gemäss Figur 1 können zur Berechnung der gesuchten Punktposition die durch den Tracker ermittelte Anfangsposition 3.1 und die ebenfalls durch den Tracker ermittelte Orientierung der Geraden, auf der die Bewegungsbahn und der Referenzpunkt liegen, herangezogen werden oder die durch den Tracker ermittelte Anfangsposition 3.1 und Endposition 3.2.

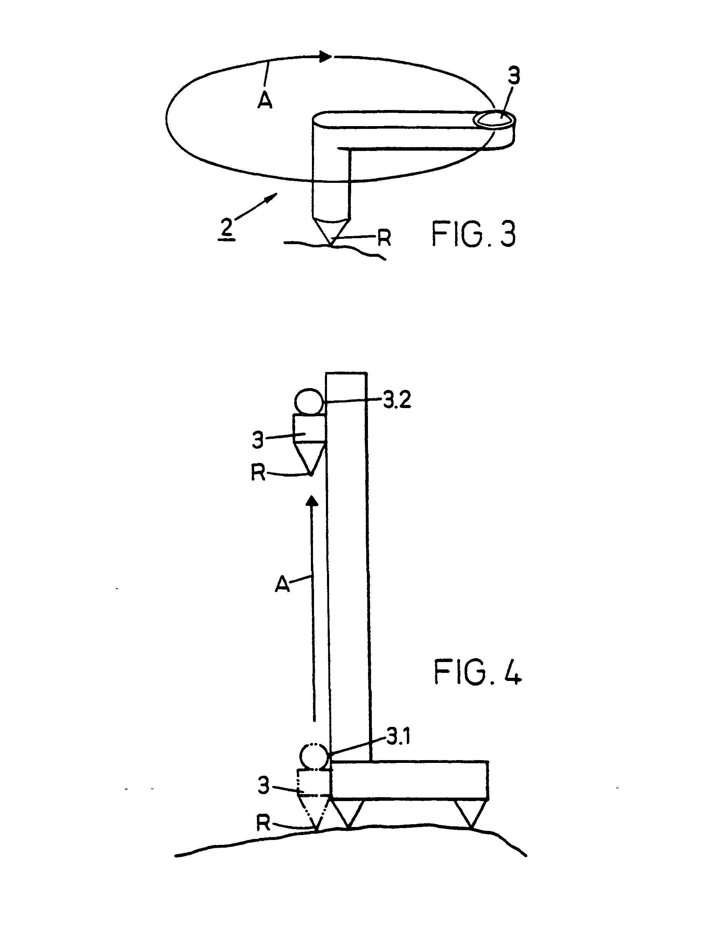

**Figur 3** zeigt schematisch eine weitere, beispielhafte Ausführungsform der erfindungsgemässen Messvorrichtung 2. Die Bewegungsbahn des Retroreflektors 3 ist in diesem Falle eine Kreisbahn (illustriert durch Pfeil A), die beispielsweise derart angeordnet ist, dass sie zusammen mit dem Referenzpunkt R einen Kreiskegel bildet. Der Antrieb für die Bewegung des Retroreflektors 3 ist vorteilhafterweise ein an der Vorrichtung angeordneter Elektromotor.

Da die Bewegungsbahn des Retroreflektors 3 gemäss Figur 3 in sich geschlossen und symmetrisch zum Referenzpunkt angeordnet ist, ist es möglich, eine beliebige Reflektorposition auf der Bewegungsbahn als Anfangsposition zu registrieren und mindestens einen Teil der Bewegungsbahn für die Berechnung der Orientierung der Vorrichtung auszumessen.

**Figur 4** zeigt eine weitere, beispielhafte Ausführungsform der erfindungsgemässen Vorrichtung. Diese Vorrichtung weist einen auf einer geradlinigen Bewegungsbahn bewegbaren Retroreflektor 3 auf, und einen Referenzpunkt R, der auf derselben Geraden liegt. Dabei ist der Referenzpunkt R fest mit dem Retroreflektor 3 verbunden und wird mit diesem bewegt, wobei in der Anfangsposition 3.1 die definierte Positionsrelation von Referenzpunkt R und zu bestimmender Punktposition erstellt ist.

Der Vorteil der Ausführungsform der erfindungsgemässen Vorrichtung gemäss Figur 4 gegenüber der Ausführungsform gemäss Figur 2 liegt darin, dass der Retroreflektor relativ zum Referenzpunkt nicht bewegt wird, insbesondere nicht gegen einen Anschlag bewegt wird. Aus diesem Grunde ist die Distanz zwischen dem optischen Zentrum des Reflektors 3 und dem Referenzpunkt R, die für eine genaue Vermessung genau bekannt sein muss, keiner Abnützungs-bedingten Veränderung unterworfen.

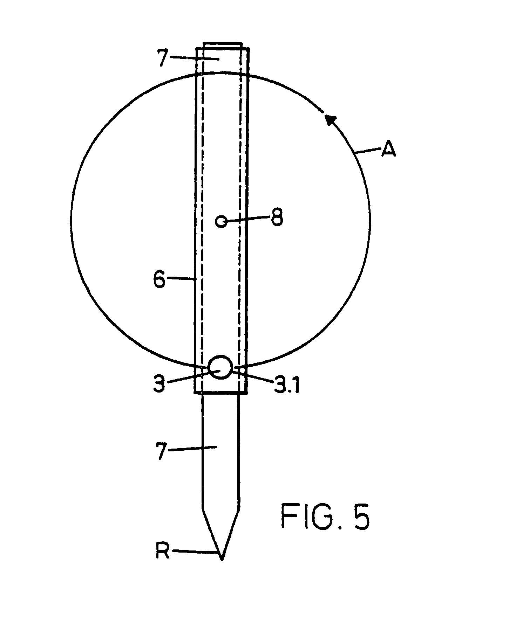

**Figur 5** zeigt schematisch eine weitere, beispielhafte Ausführungsform der erfindungsgemässen Vorrichtung. Die Vorrichtung weist einen Messstab 7 mit Referenzpunkt-Spitze R auf und einen darauf um eine Drehachse 8 drehbar montierten Reflektorarm 6, der an seinem einen Ende den Zielpunkt (optisches Zentrum des Retroreflektors 3) trägt. Wenn der Reflektorarm 6 gedreht wird, läuft der Reflektor 3 auf einer Kreisbahn (Pfeil A) in einer zur Länge des Messtabes parallelen Ebene. Die Anfangsposition 3.1 des Reflektors, in der der Reflektor 3 bzw. der Reflektorarm 6 in der Figur 5 dargestellt ist, ist beispielsweise diejenige Position in der der Zielpunkt in der genannten Ebene auf der Geraden liegt, die die Drehachse (8) und den Referenzpunkt (R) bzw. deren Projektionen in die genannte Ebene miteinander verbindet. Auch diese Vorrichtung ist mit einem sehr einfachen mathematischen Modell erfassbar. Ferner kann sie mit sehr einfachen Mitteln realisiert und bei geeigneter, reibungsarmer Lagerung des Reflektorarms 6 auf dem Messstab 7 ohne weiteres von Hand betätigt werden.

Es ist keine Bedingung, dass die Anfangsposition des Zielpunktes der in der Figur 5 dargestellten Vorrichtung mit den Projektionen des Referenzpunktes und der Rotationsachse auf einer Geraden liegen. In derselben Weise kann mit minimal mehr Rechen aufwand auch eine andere Anfangsposition des Zielpunktes verwertet werden.

Für die in den Figuren 2 bis 5 dargestellten Ausführungsformen der erfindungsgemässen Vorrichtung sind keine Befestigungsmittel oder Positionierungsmittel dargestellt, mit denen diese Vorrichtungen in Lokalitäten von Punkten mit zu bestimmenden Positionen, beispielsweise auf entsprechenden Oberflächen befestigbar bzw. definiert positionierbar sind. Derartige Mittel sind dem Fachmann von den bekannten Messvorrichtungen mit stationären Zielpunkten bekannt und können von ihm der Verwendung der Vorrichtung entsprechend an den erfindungsgemässen Vorrichtungen angeordnet werden. Dasselbe gilt für die Ausgestaltung der Vorrichtung im Bereiche des Referenzpunktes R.

## Patentansprüche

1. Verfahren zur indirekten Bestimmung einer Punktposition (P) und/oder einer Oberflächenorientierung in einer Punktposition mit Hilfe eines Trackers (1) und einer Messvorrichtung (2), welche Messvorrichtung (2) einen Retroreflektor (3) als Zielpunkt für den Strahl des Trackers (1) und einen Referenzpunkt (R) aufweist und im Bereiche der zu bestimmenden Punktposition (P) derart positionierbar ist, dass die zu bestimmende Punktposition (P) und die Position des Referenzpunktes (R) relativ zueinander genau definiert sind und zwischen dem Trakker (1) und der Messvorrichtung (2) eine direkte Sichtverbindung besteht, **dadurch gekennzeichnet, dass** der Zielpunkt der Messvorrichtung (2) in einer Anfangsposition (3.1) vom Tracker (1) erfasst wird, dass die Anfangsposition (3.1) des Zielpunktes durch Bestimmen der Richtung und der Distanz zwischen Trakkerposition und Zielpunkt bestimmt wird, dass der Zielpunkt von der Anfangsposition (3.1) auf einer relativ zum Referenzpunkt (R) genau definierten Bewegungsbahn (A) bewegt wird, wobei der Trackerstrahl ihm folgt und die Distanz-veränderung zwischen Tracker (1) und Zielpunkt registriert und dass anhand der bestimmten Anfangsposition (3.1), anhand der durch den Tracker (1) verfolgten Bewegungsbahn (A) des Zielpunktes und anhand von gespeicherten Werten betreffend Bewegungsbahn (A) und relativer Anordnung von Bewegungsbahn (A) und Referenzpunkt (R) und relativer Anordnung von Referenzpunkt (R) und zu bestimmender Punktposition (P) die Position und die Orientierung der Messvorrichtung (2), die Position des Referenzpunktes (R) und die zu bestimmende Punktposition (P) und/oder die Oberflächenorientierung in der Punktposition berechnet werden.

2. Verfahren nach Anspruch 1, **dadurch gekennzeichnet, dass** die Distanzverändenmg registriert wird, wenn der Zielpunkt bzw. der Retroreflektor (3) in einer genau definierten Endposition (3.2) positioniert ist.

3. Verfahren nach Anspruch 1, **dadurch gekennzeichnet, dass** die Distanzveränderung registriert wird, während der Zielpunkt bzw. der Retroreflektor (3) entlang der Bewegungsbahn (A) bewegt wird.

4. Verfahren nach einem der Ansprüche 1 bis 3, **dadurch gekennzeichnet, dass** die relativ zum Referenzpunkt (R) genau definierte Bewegungsbahn (A) geradlinig ist.

5. Verfahrten nach einem der Ansprüche 1 bis 4, **dadurch gekennzeichnet, dass** die relativ zum Referenzpunkt (R) genau definierte Bewegungsbahn (A) in sich geschlossen ist.

6. Verfahren nach Anspruch 5, **dadurch gekennzeichnet, dass** die relativ zum Referenzpunkt (R) genau definierte Bewegungsbahn (A) kreisförmig ist.

7. Verfahren nach Anspruch 6, **dadurch gekennzeichnet, dass** die kreisförmige Bewegungsbahn symmetrisch zum Referenzpunkt angeordnet ist und dass der Zielpunkt bzw. der Retroreflektor von einer frei wählbaren Anfangsposition über mindestens einen Teil der kreisförmigen Bewegungsbahn (A) bewegt wird.

8. System zur indirekten Bestimmung einer Punktposition (P) und/oder einer Oberflächenorientierung in einer Punktposition, welches System einen Tracker (1), eine Messvorrichtung (2) und einen Rechner (4) aufweist, wobei die Messvorrichtung (2) einen Retroreflektor (3) als Zielpunkt für den Strahl des Trackers (1) und einen Referenzpunkt (R) aufweist und im Bereiche der zu bestimmenden Punktposition (P) derart positionierbar ist, dass die zu bestimmende Punktposition (P) und die Position des Referenzpunktes (R) relativ zueinander genau definiert sind und zwischen dem Tracker (1) und der Messvorrichtung (2) eine direkte Sichtverbindung besteht, **dadurch gekennzeichnet, dass** der Zielpunkt der Messvorrichtung (2) auf einer relativ zum Referenzpunkt (R) genau definierten Bewegungsbahn (A) bewegbar ist und dass der Rechner (4) zur Berechnung der Position und der Orientierung der Messvorrichtung (2), der Position des Referenzpunktes (R) und der zu bestimmende Punktposition (P) und/oder der Oberflächenorientierung in der Punktposition (P) anhand der bestimmten Anfangsposition (3.1), anhand der durch den Tracker (1) verfolgten Bewegungsbahn (A) des Zielpunktes und anhand von gespeicherten Werten betreffend der Bewegungsbahn (A) und der relativen Anordnung von Bewegungsbahn (A) und Referenzpunkt (R) und der relativen Anordnung von Referenzpunkt (R) und zu bestimmender Punktposition (P) ausgerüstet ist.

9. System nach Anspruch 8, **dadurch gekennzeichnet, dass** die relativ zum Referenzpunkt (R) genau definierte Bewegungsbahn (A) geradlinig ist.

10. System nach Anspruch 9, **dadurch gekennzeichnet, dass** der Referenzpunkt (R) starr mit dem Retroreflektor (3) verbunden ist.

11. System nach Anspruch 8, **dadurch gekennzeichnet, dass** die relativ zum Referenzpunkt (R) genau definierte Bewegungsbahn (A) in sich geschlossen ist.

12. System nach Anspruch 11, **dadurch gekennzeichnet, dass** die relativ zum Referenzpunkt (R) genau definierte Bewegungsbahn (A) kreisförmig ist.

13. System nach Anspruch 12, **dadurch gekennzeichnet, dass** die Messvorrichtung (2) einen Messstab (7) aufweist, an dessen einem Ende der Referenzpunkt (R) angeordnet ist, und einen auf dem Messstab (7) in einer Ebene parallel zur Länge des Messstabes drehbar gelagerten Reflektorarm (6), auf dem der Zielpunkt angeordnet ist, und dass der Reflektorarm (6) in einer Rotationsposition arretierbar ist.

14. System nach Anspruch 13, **dadurch gekennzeichnet, dass** die arretierbare Rotationsposition des Reflektorarmes (6) derart ist, dass in dieser Position der Zielpunkt und die Projektion der Drehachse (8) des Reflektorarmes (6) und des Referenzpunktes (R) auf die Ebene der Keisbahn des Zietpunktes auf einer Gerade liegen.

15. System nach Anspruch 12, **dadurch gekennzeichnet, dass** die kreisförmige Bewegungsbahn symmetrisch zum Referenzpunkt angeordnet ist und dass der Zielpunkt bzw. der Retroreflektor von einer frei wählbaren Anfangsposition über mindestens einen Teil der kreisförmigen Bewegungsbahn (A) bewegbar ist.

16. System nach einem der Ansprüche 8 bis 15, **dadurch gekennzeichnet, dass** die Messvorrichtung zur Bewegung des Zielpunktes bzw. Retroreflektors (3) entlang der Bewegungsbahn (A) einen Antrieb aufweist.

17. System nach Anspruch 16, **dadurch gekennzeichnet, dass** der Antrieb eine Feder (5) mit einer Arretierung oder ein Motor ist.

18. System nach einem der Ansprüche 8 bis 17, **dadurch gekennzeichnet, dass** die Definition der Relation zwischen zu bestimmender Punktposition (P) und Referenzpunkt (R) eine mechanische oder eine mechanisch-optische ist.

19. System nach Anspruch 18, **dadurch gekennzeichnet, dass** der Referenzpunkt (R) auf einer Spitze der Messvorrichtung (2) liegt, welche Spitze in der zu bestimmenden Punktposition (P) positionierbar ist.

## Claims

1. Method for the indirect determination of a point position (P) and/or of a surface orientation in a point position with the help of a tracker (1) and with the help of a measuring device (2), the measuring device (2) comprising a retro-reflector (3) as a target point for a light beam emitted by the tracker (1) and a reference point (R) and being positionable in the region of the point position (P) in such a manner, that the reference point (R) of the device (2) and the point position (P) assume predefined relative positions and in such a manner, that a direct line of sight connection exists between the tracker (1) and the measuring device (2), **characterized in that** the target point of the measuring device (2) positioned in a starting position (3.1) is detected by the tracker (1), that the starting position (3.1) of the target point is determined by determining the direction and the distance between the tracker position and the target point, that the target point is moved away from the starting position (3.1) along a trajectory path (A) exactly defined relative to the reference point (R), while being followed by the tracker beam and while changes in distance and direction between the tracker (1) and the target point are recorded, and that on the basis of the determined starting position 3.1, on the basis of the trajectory path (A) of the target point tracked by the tracker (1) and on the basis of stored values concerning the trajectory path (A) and the relative arrangement of the trajectory path (A) and the reference point (R) and the relative arrangement of the reference point (R) and the point position (P), the position and the orientation of the measuring device (2), the position of the reference point (R) and the point position (P) and/or the surface orientation in the point position (P) are calculated.

2. Method in accordance with claim 1, **characterized in that** the changes in distance and direction between the tracker (1) and the target point are registered when the target point or the retro-reflector (3) respectively has arrived in an end position (3.2) on the trajectory path.

3. Method according to claim 1, **characterized in that** the changes in distance and direction between the tracker (1) and the target point are registered during the movement of the target point or retro-reflector (3) respectively along the trajectory path (A).

4. Method according to one of claims 1 to 3, **characterized in that** the relative to the reference point (R) exactly defined trajectory path (A) is a straight line.

5. Method according to one of claims 1 to 3, **characterized in that** the relative to the reference point (R) exactly defined trajectory path (A) is closed in itself.

6. Method in accordance with claim 5, **characterized in that** the relative to the reference point (R) exactly defined trajectory path (A) has a circular shape.

7. Method according to claim 6, **characterized in that** the circular trajectory path (A) is arranged symmetrically to the reference point and that the target point or the retro-reflector (3) respectively is moved from a freely selected starting position along at least a part of the circular trajectory path (A).

8. System for the indirect determination of a point position (P) and/or of a surface orientation in a point position, the system comprising a tracker (1), a measuring device (2) and a computer (4), wherein the measuring device (2) comprises a retro-reflector (3) as a target point for a light beam emitted by the tracker (1) and a reference point (R) and is positionable in the region of the point position (P) in such a manner, that the reference point (R) of the device (2) and the point position (P) assume predefined relative positions and in such a manner, that a direct line of sight connection exists between the tracker (1) and the measuring device (2), **characterized in that** the target point of the measuring device (2) is movable along a trajectory path (A) exactly defined relative to the reference point (R) and **in that** the computer is equipped for calculating the position and the orientation of the measuring device (2), the position of the reference point (R) and the point position (P) and/or the surface orientation in the point position (P) on the basis of a starting position (3.1) of the target point on the trajectory path (A) as determined by the tracker, on the basis of the movement of the target point along the trajectory path as tracked by the tracker (1) and on the basis of stored values concerning the trajectory path (A) and the relative arrangement of the trajectory path (A) and the reference point (R) and the relative arrangement of the reference point (R) and the point position (P).

9. System according to claim 8, **characterized in that** the relative to the reference point (R) exactly defined trajectory path (A) is a straight line.

10. System in accordance with claim 9, **characterized in that** the reference point (R) is rigidly connected with the retro-reflector (3).

11. System according to claim 8, **characterized in that** the relative to the reference point (R) exactly defined trajectory path (A) is closed in itself.

12. System in accordance with claim 11, **characterized in that** the relative to the reference point (R) exactly defined trajectory path (A) has a circular shape.

13. System according to claim 12, **characterized in that** the measuring device (2) comprises a measuring ruler (7), at the end of which the reference point (R) is located, and a reflector arm (6) arranged on the measuring ruler (7) to be rotating parallel to the length of the measuring ruler in a bearing, and that the reflector arm (6) is lockable in one rotation position.

14. System in accordance with claim 13, **characterized in that** the lockable rotation position of the reflector arm (6) is such, that in this position the target point and the projections of the axis of rotation (8) of the reflector arm (6) and of the reference point (R) on the plane of the circular path of the target point are on a straight line.

15. System according to claim 12, **characterized in that** the circular trajectory path (A) is arranged symmetrically to the reference point and that the target point or the retro-reflector (3) respectively is moved from a freely selected starting position along at least a part of the circular trajectory path (A).

16. System in accordance with one of claims 8 to 15, **characterized in that** the measuring device (2) comprises a drive for the movement of the target point or of the retro-reflector (3) respectively along the trajectory path (A).

17. System according to claim 16, **characterized in that** the drive is a spring (5) with a locking device or a motor.

18. System in accordance with one of claims 8 to 17, **characterized in that** the definition of the relationship between the point position (P) to be determined and the reference point (R) is a mechanical one or a mechanical-optical one.

19. System according to claim 18, **characterized in that** the reference point (R) is located on the tip of the device (2), which tip is able to be positioned in the point position (P) to be determined.

## Revendications

1. Procédé pour la détermination indirecte d'une position d'un point (P) et/ou d'une orientation superficielle dans une position d'un point à l'aide d'un suiveur (1) et d'un dispositif de mesure (2), lequel dispositif de mesure (2) comporte un rétro-réflecteur (3) en tant que point cible pour le faisceau du suiveur (1) et un point de référence (R), et peut être positionné dans la zone de la position du point (P) à déterminer, de manière à ce que la position du point (P) qui doit être déterminée et la position du point de référence (R) soient exactement définies l'une par rapport à l'autre et qu'une liaison visuelle directe existe entre le suiveur (1) et le dispositif de mesure (2), **caractérisé en ce que** le point cible du dispositif de mesure (2) est détecté dans une position initiale (3.1) par le suiveur (1), **en ce que** la position initiale (3.1) du point cible est déterminée par détermination de la direction et de la distance entre la position du suiveur et le point cible, **en, ce que** le point cible est déplacé de la position initiale (3.1) sur une trajectoire de déplacement (A) exactement définie par rapport au point de référence (R), le faisceau du suiveur le suivant et enregistrant la modification de distance entre le suiveur (1) et le point cible et **en ce qu'**à l'aide de la position initiale déterminée (3.1), à l'aide de la trajectoire de déplacement (A) du point cible suivie par le suiveur (1) et à l'aide de valeurs enregistrées concernant la trajectoire de déplacement (A) et la disposition relative de la trajectoire de déplacement (A) et le point de référence (R) et la disposition relative du point de référence (R) et de la position ponctuelle (P) à déterminer, on calcule la position et l'orientation du dispositif de mesure (2), la position du point de référence (R) et la position du point (P) qui doit être déterminée et/ou l'orientation superficielle dans la position du point.

2. Procédé selon la revendication 1, **caractérisé en ce qu'**on enregistre la modification de distance lorsque le point cible ou le rétro-réflecteur (3) est positionné dans une position finale (3.2) exactement définie.

3. Procédé selon la revendication 1, **caractérisé en ce qu'**on enregistre la modification de distance pendant que le point cible ou le rétro-réflecteur (3) se déplace le long de la trajectoire de déplacement (A).

4. Procédé selon l'une quelconque des revendications 1 à 3, **caractérisé en ce que** la trajectoire de déplacement (A) exactement définie par rapport au point de référence (R) est rectiligne.

5. Procédé selon l'une quelconque des revendications 1 à 4, **caractérisé en ce que** la trajectoire de déplacement (A) exactement définie par rapport au point de référence (R) est fermée sur elle-même.

6. Procédé selon la revendication 5, **caractérisé en ce que** la trajectoire de déplacement (A) exactement définie par rapport au point de référence (R) est circulaire.

7. Procédé selon la revendication 6, **caractérisé en ce que** la trajectoire de déplacement circulaire est disposée de façon symétrique par rapport au point de référence et **en ce que** le point cible ou le rétro-réflecteur est déplacé d'une position initiale librement sélectionnable, sur au moins une partie de la trajectoire de déplacement circulaire (A).

8. Système pour la détermination indirecte d'une position d'un point (P) et/ou d'une orientation superficielle dans une position d'un point, lequel système comporte un suiveur (1), un dispositif de mesure (2) et un ordinateur (4), le dispositif de mesure (2) comportant un rétro-réflecteur (3) en tant que point cible pour le faisceau du suiveur (1) et un point de référence (R) et étant positionnable dans la région de la position du point (P) qui doit être déterminée, de façon telle que la position du point qui doit être déterminée (P) et la position du point de référence (R) soient exactement définies l'une par rapport à l'autre et qu'une liaison visuelle directe existe entre le suiveur (1) et le dispositif de mesure (2), **caractérisé en ce que** le point cible du dispositif de mesure (2) peut être déplacé sur une trajectoire de déplacement (A) exactement définie par rapport au point de référence (R) et **en ce que** l'ordinateur (4) est équipé pour calculer la position et l'orientation du dispositif de mesure (2), la position du point de référence (R) et la position du point (P) qui doit être déterminée et/ou l'orientation superficielle dans la position du point (P) à l'aide de la position initiale déterminée (3.1), à l'aide de la trajectoire de déplacement (A) du point cible suivie par le suiveur (1) et à l'aide de valeurs enregistrées concernant la trajectoire de déplacement (A) et la disposition relative de la trajectoire de déplacement (A) et du point de référence (R) et la disposition relative du point de référence (R) et de la position du point (P) qui doit être déterminée.

9. Système selon la revendication 8, **caractérisé en ce que** la trajectoire de déplacement (A) exactement définie par rapport au point de référence (R) est rectiligne.

10. Système selon la revendication 9, **caractérisé en ce que** le point de référence (R) est relié de façon rigide au rétro-réflecteur (3).

11. Système selon la revendication 8, **caractérisé en ce que** la trajectoire de déplacement (A) exactement définie par rapport au point de référence (R) est fermée sur elle-même.

12. Système selon la revendication 11, **caractérisé en ce que** la trajectoire de déplacement (A) exactement définie par rapport au point de référence (R) est circulaire.

13. Système selon la revendication 12, **caractérisé en ce que** le dispositif de mesure (2) comporte une tige de mesure (7), à l'extrémité de laquelle est situé le point de référence (R), et un bras réflecteur (6) logé de façon rotative sur la tige de mesure (7) dans un plan parallèle à la longueur de la tige de mesure, sur lequel est situé le point cible et **en ce que** le bras réflecteur (6) peut être bloqué dans une position de rotation.

14. Système selon la revendication 13, **caractérisé en ce que** la position de rotation dans laquelle le bras réflecteur (6) peut être bloqué est telle que, dans cette position, le point cible et la projection de l'axe de rotation (8) du bras réflecteur (6) et du point de référence (R) sur le plan défini par la trajectoire circulaire du point de référence se situent sur une droite.

15. Système selon la revendication 12, **caractérisé en ce que** la trajectoire de déplacement circulaire est disposée de façon symétrique par rapport au point de référence et **en ce que** le point cible ou le rétro-réflecteur peut être déplacé d'une position initiale librement sélectionnable sur au moins une partie de la trajectoire de déplacement (A) circulaire.

16. Système selon l'une quelconque des revendications 8 à 15, **caractérisé en ce que** le dispositif de mesure comporte un mécanisme d'entraînement pour le déplacement du point cible ou du rétro-réflecteur (3) le long de la trajectoire de déplacement (A).

17. Système selon la revendication 16, **caractérisé en ce que** le mécanisme d'entraînement est un ressort (5) avec un arrêt ou un moteur.

18. Système selon l'une quelconque des revendications 8 à 17, **caractérisé en ce que** la définition de la relation entre la position du point (P) qui doit être déterminée et le point de référence (R) est mécanique ou optico-mécanique.

19. Système selon la revendication 18, **caractérisé en ce que** le point de référence (R) se situe sur une pointe du dispositif de mesure (2), laquelle pointe peut être positionnée dans la position du point (P) qui doit être déterminée.
